# EUROPEAN PATENT APPLICATION

(11) **EP 1 006 600 A2**
(43) Date of publication of application: **07.06.2000**
(21) Application number: 99309156.0
(22) Date of filing: 17.11.1999
(51) Int. Cl.: H01M 8/02

(54) **Separator structure for a fuel cell and method for making same**

(30) Priority: 17.11.1998 JP 34360498
(71) Applicant: NICHIAS CORPORATION, Tokyo (JP)
(72) Inventor: Ueda, Katsunori, Toyota-shi, Aichi-ken (JP); Inagaki, Michihiro, Toyota-shi, Aichi-ken (JP)
(74) Representative: Pluckrose, Anthony William

(57) **Abstract**

The present invention provides (with reference to Figure 1) a separator structure (5) for a fuel cell, by means of which time required for mounting separators (5) can be eliminated. A sheet gasket (6) is stuck by adhesion on a surface of each of the separators (5) at a predetermined position. Owing to the structure, in which the gasket (6) is adhered to each of the separators (5), time required for mounting gaskets (6) can be eliminated.

## Description

The present invention relates to a fuel cell and in particular to a separator structure used for mounting a fuel cell.

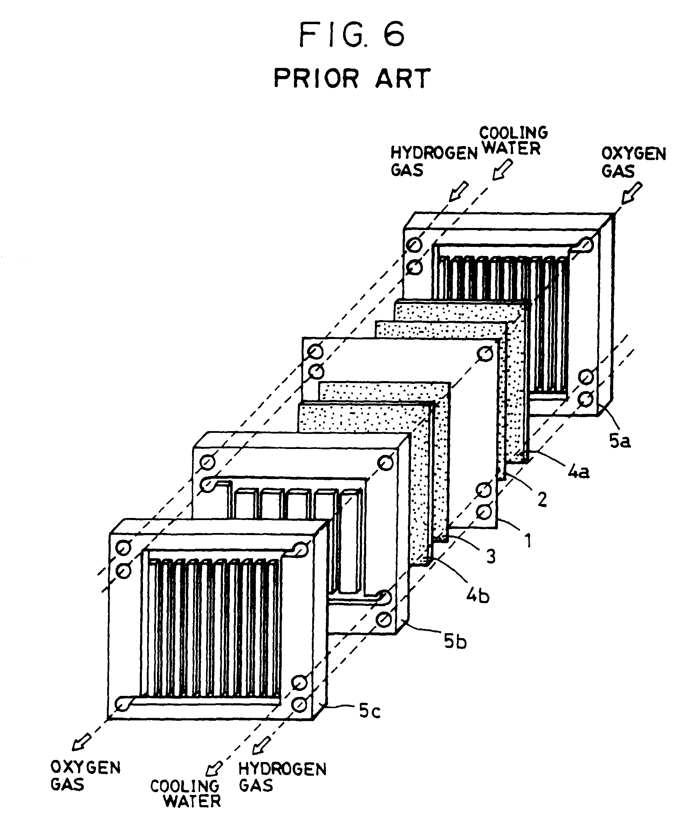

Fig. 6 shows an example of structure of a prior art fuel cell (PEFC).

In Fig. 6, reference numeral 1 is an ion exchange membrane (electrolyte); 2 is an oxygen electrode; 3 is a hydrogen electrode; 4a and 4b are supporting collectors; and 5a, 5b and 5c are separators made of carbon, each of which has rectifying grooves on one surface, in which gas flows and rectifying grooves on the other surface, in which cooling water flows. A single cell is constructed by interposing the ion exchange membrane 1 and the two electrodes 2 and 3 mounted in one body between two separators.

A number of such single cells are superposed on each other to form a stack. A metal collecting plate is mounted on each of the two ends of the stack, which plate serves as a terminal for taking out external current. Further a clamping plate is disposed thereon at each end through an insulating plate. A fuel cell is constructed by clamping the whole thus obtained in one body by means of screws.

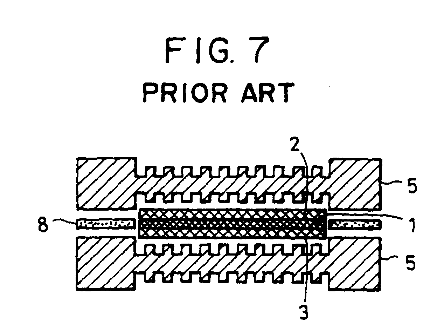

Heretofore, in a step of mounting a fuel cell constructed as described above, as indicated in Fig. 7 a rubber 0-ring, a rubber sheet or a gasket sheet (flexible sheet gasket other than the rubber sheet) was used for a gasket 8 for every two separators in the fuel cell. It was a separate part other than the separators 5 and a step of mounting it was also separate one.

In general, since several tens to several hundreds of separators are superposed on each other in one fuel cell, tremendous work time is required for mounting gaskets.

Further, since the string diameter of the rubber 0-ring used for the gasket is as small as several millimeters and therefore it is not easy to handle it, mounting of the gasket on a correct position is difficult. In addition, concerning to the seat gasket, the difference in size between the separator and the gasket is small. Therefore it was difficult to mount it on a correct position with respect to parts disposed within the separator (such as an ion exchange membrane and electrodes) in a short time.

Still further, when gaskets, whose thickness is reduced (2 to 3 mm) in order to decrease the weight of the cell, are used, since gas serving as fuel is made flow with a pressure higher than external pressure, there is a problem that the gaskets move outward.

Liquid gaskets are used sometimes. In this case a defect is produced that they bulge out of places where they should be and drying time is necessary.

The present invention provides, in a first aspect, a separator structure for a fuel cell having a plurality of single cells, each of which is constructed by disposing electrodes on both the sides of an ion exchange membrane and putting them together between separators, wherein a gasket or a rubber ring is stuck by adhesion at a predetermined position on each of said separators in one body.

In a second aspect, the present invention provides a method for fabricating a separator structure used for a fuel cell, in which each of single cells is constructed by disposing electrodes on both the sides of an ion exchange membrane and putting them together between separators, wherein each separator is obtained by forming a gasket or a rubber ring on a surface thereof by vulcanizing it after having injected rubber material and vulcanizing agents into a metal die disposed thereon.

A main object of the present invention is to provide a separator structure for a fuel cell, by means of which time for mounting rubber O-rings or gasket sheets can be completely eliminated and it is possible also to reduce significantly inconveniences at mounting them represented by positional displacement thereof at mounting them, etc. so that handling thereof can be considerably improved.

In order to achieve the above object, an invention defined by claim 1 is characterised in that in fuel cell using a plurality of single cells, each of which is constructed by disposing electrodes on both the sides of an ion exchange membrane and putting them together between separators, a gasket or rubber ring is stuck by adhesion at a predetermined position on each of the separators in one body.

An invention defined by claim 2 is characterised in that, in the invention defined by claim 1, the gasket consists of a foam rubber layer disposed on surfaces of a metal plate.

An invention defined in claim 3 is characterised in that the gasket is formed with pressure at a predetermined position of the separator by using a metal die.

An invention defined by claim 4 relates to a method for fabricating a separator structure used for a fuel cell, in which each of single cells is constructed by disposing electrodes on both the sides of an ion exchange membrane and putting them together between separators, and is characterised in that each separator is obtained by forming a gasket or a rubber ring on a surface thereof vulcanizing it after having injected rubber material and vulcanizing agents into a metal die disposed thereon.

An invention defined by claim 5 is characterised in that, in the invention defined by claim 4, adhesive is applied on the surface of the separator at a part where the gasket or the rubber ring should be formed.

Rubber materials used for the gasket or the rubber ring according to the inventions are nitryl rubber, styrene butadiene rubber, isoprene rubber, chloroprene rubber, butadiene rubber, butyl rubber, ethylene-propylene rubber, fluorocarbon rubber, silicone rubber, chlorosulfonated polyethylene, ethylene (vinyl) acetate rubber, polyethylene chloride rubber, butyl chloride rubber, epichlorohydrin rubber, nitryl isoprene rubber, natural rubber, etc.

Concerning the foam rubber layer formed on the surface of the metal plate, a steel plate, a stainless steel plate, an aluminium plate, etc. are used for the metal, while any of foamed synthetic and natural rubbers can be used for the foamed rubber layer, but acrylonitryl rubber, polyacrylate rubber, fluoroelastomer, chloroprene rubber, ethylene propylene polymer, butadiene rubber, epichlorohydrin rubber, etc. are preferably used therefor.

Preferred embodiments of the present invention will now be described, by way of example only, with reference to the accompanying drawings, in which:
Fig. 1 is a perspective view of a separator structure for a fuel cell indicating an embodiment of the present invention;
Fig. 2 is a cross-sectional view of a single cell in a mounted state using the separator structure indicated in Fig.1;
Fig.3 is a perspective view of a separator structure indicating another embodiment of the present invention;
Fig. 4 is a cross-sectional view of a single cell in a mounted state using the separator structure indicated in Fig. 3;
Fig. 5 is a cross-sectional view of a separator structure indicating still another embodiment of the present invention;
Fig. 6. is an exploded perspective view of a mounting state of a prior art fuel cell; and
Fig. 7 is a cross-sectional view of a single cell in a mounted state using prior art separators.

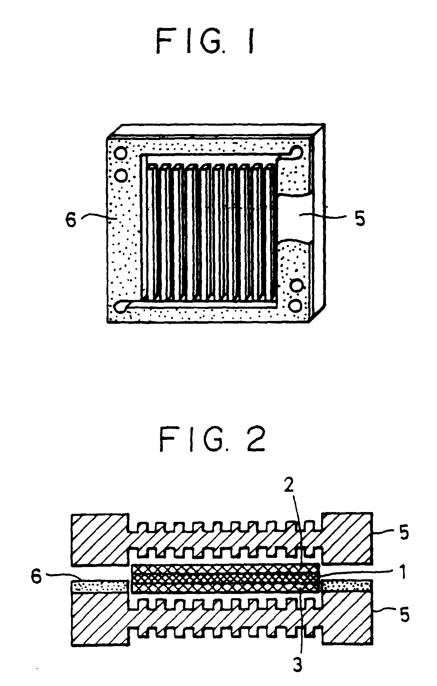

As indicated in Fig. 1, a preferable mode of realisation of the present invention is a structure formed in one body by sticking a seat gasket 6 on a surface of a separator 5 constituting a fuel cell, using adhesive.

An embodiment of the present invention is indicated in Figs. 1 and 2.

Fig. 1 shows a structure formed in one body by sticking a seat gasket 6 on a surface of a separator 5 at a predetermined position.

Fig. 2 shows a state of construction, in which a single cell is constructed by using the separator 5 on which the seat gasket 6 is stuck by adhesion. In the figure reference numeral 1 is an ion exchange membrane and 2 and 3 are electrodes.

For the seat gasket 6 it is preferable to use a foam rubber layer formed on surfaces of a rubber seat or a thin metal plate, but any material can be selected arbitrarily to be used, if it can be used as a sealing material.

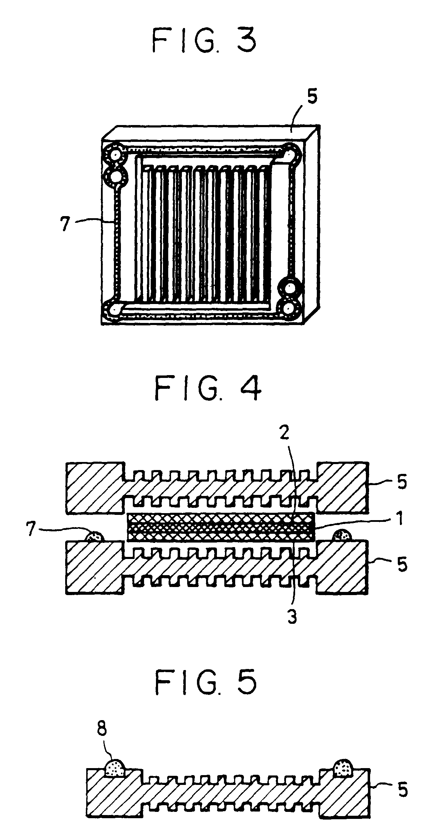

Figs. 3 and 4 show other embodiments of the present invention.

Fig. 3 indicates a construction formed in one body by sticking a rubber ring 7 on a surface of a separator 5, using adhesive.

Any cross-sectional shape of the rubber ring can be used, if it can seal off.

Fig. 4 indicates a single cell in a mounted stated formed in one body using separators 5, on each of which a rubber ring 7 is stuck by adhesion;

Fig. 5 indicates another embodiment, in which a groove is formed in a surface portion of a separator 5, a lower portion of a rubber ring 8 is engaged with the groove and stuck thereon by using adhesive.

The gasket and the rubber ring indicated in Figs. 1, 3 and 5 may be formed previously and combined thereafter with a separator, but they may be formed by an injection method, and extrusion method, or a press compression extrusion method.

An embodiment, in which the gasket is formed by the press compression extrusion method among them, will be described below.

At first, adhesive is applied to the separator. Leaving a part necessary for the gasket, application is effected after having covered the other part with a mask.

An adhesive containing a silane coupling agent is used.

Any method, by which coating can be effected uniformly, such as brushing, dipping, spraying, etc., can be used for the application, but a spraying method is preferable from the point of view of work efficiency.

An applied layer of the adhesive may be several microns to several tens of microns thick, but a layer 1 to 2 µm thick is most preferable.

The adhesive is dried after having been applied. It is dried by natural drying by leaving it 30 to 60 minutes long at a temperature of 25°C. However it can be dried also forcedly by leaving it 10 to 15 minutes long at a temperature between 50 and 100°C.

Then a rubber layer is formed on the separator, on which the adhesive is applied. Silicone rubber having a good durability is used for the rubber. However any kind of rubber can be used, if it has a satisfactory durability against environment within the fuel cell.

The separator is placed in a metal die and rubber material and vulcanizing agents are injected according to a pattern of the gasket on the surface of the separator, where the gasket should be formed, and vulcanized. This vulcanization is effected in a period of time of 3 to 15 minutes.

The gasket is formed in this way on the surface of the separator.

The adhesive may be omitted, depending on the material for the gasket. The adhesive can be omitted, for example, in case where neither falling-off of any rubber ring nor leak of gas, etc. takes place, when inner pressures such as pressure of oxygen gas, pressure of hydrogen gas serving as fuel gas, pressure of cooling water, etc. is 5kgf/cm² at maximum and the gasket has a satisfactory durability in an environment at operating the fuel cell.

As described above, following effects can be obtained, owing to the structure of the single cell by using separators, on each of which a seat gasket (or rubber ring) is stuck in one body by means of adhesive, with respect to a structure, in which each single cell is mounted by using a separate gasket 8, as indicated in Fig. 7.
(a) Time required for mounting gaskets is completely eliminated;
(b) Defects at mounting represented by positional displacement of gaskets can be significantly reduced;
(c) Easiness of handling and mounting work can be considerably improved; and
(d) Reduction in total cost can be realised at the same time by reducing the number of parts from 2 to 1.

As described above in detail, according to the present invention, since each separator constituting a fuel cell has a structure formed in one body, in which a gasket or a rubber ring is stuck by adhesion, etc., time required for mounting the gasket can be completely eliminated so that the present invention can contribute considerably to improvement of easiness of work for mounting the fuel cell.

## Claims

1. A separator structure for a fuel cell having a plurality of single cells, each of which is constructed by disposing electrodes on both the sides of an ion exchange membrane and putting them together between separators, wherein a gasket or a rubber ring is stuck by adhesion at a predetermined position on each of said separators in one body.

2. A separator structure for a fuel cell according to claim 1 wherein the gasket consists of a foam rubber layer disposed on surfaces of a metal plate.

3. A separator structure for a fuel cell according to claim 1 or claim 2 wherein the gasket is formed with pressure at a predetermined position of the separator by using a metal die.

4. A method for fabricating a separator structure used for a fuel cell, in which each of single cells is constructed by disposing electrodes on both the sides of an ion exchange membrane and putting them together between separators, wherein each separator is obtained by forming a gasket or a rubber ring on a surface thereof by vulcanizing it after having injected rubber material and vulcanizing agents into a metal die disposed thereon.

5. A method for fabricating a separator structure used for a fuel cell according to claim 4 wherein adhesive is applied on the surface of the separator at a part where the gasket or the rubber ring should be formed.
